# EUROPEAN PATENT SPECIFICATION

(11) **EP 1 291 710 B1**
(45) Date of publication and mention of the grant of the patent: **25.05.2005**
(21) Application number: 02019862.8
(22) Date of filing: 09.09.2002
(51) Int. Cl.: G03B 21/64, G03D 15/10

(54) **Slide mount loading device**
Diarähmchenladevorrichtung
Dispositif de chargement pour cadres de diapositives

(30) Priority: 10.09.2001 JP 2001273148
(43) Date of publication of application: 12.03.2003
(73) Proprietor: Fuji Photo Film Co., Ltd., Kanagawa (JP)
(72) Inventor: Tsuji, Junichi, Fuji Photo Film Co., Ltd., Ashigara-kami-gun, Kanagawa (JP); Yamaguchi, Yoshiyuki, Fuji Micrographics Co.Ltd., Kanagawa (JP); Sasaki, Hidenori, Fuji Micrographics Co., Ltd., Kanagawa (JP)
(74) Representative: Klunker . Schmitt-Nilson . Hirsch

(56) References cited:
- EP-A- 0 892 303
- FR-A- 2 659 152
- US-A- 2 649 093
- US-A- 3 974 626
- US-A- 4 237 678

## Description

### BACKGROUND OF THE INVENTION

### 1. Field of the Invention

The present invention relates to an apparatus including a slide mount cartridge and a slide mount loading device for loading a slide mount in the slide mount cartridge, according to the preamble of claim 1.

### 2. Description Related to the Prior Art

When an image on a photo film is printed on a photographic paper by a digital printer, an image reader is used. In the image reader, the image is read out from the photo film by an image sensor, such as a CCD sensor, and digitally processed. A light emitted from a light source passes through a frame having the image on the photo film that is moved in a reading station provided in a film passage way, and is received by CCD image sensor. The CCD image sensor generates a time sequential signal in response with an incident light, and the signals are transformed into a digital data by A/D converter for digital processing.

When the image is read out from a slide mount, a slide reader is used which has a slide mount carrier and a scanner section. The slide mount carrier automatically feeds the slide mount, in order to more effectively read the image. Such a type of the slide mount carrier, as disclosed in Japanese Patent Laid-Open Publications No. 11-112714 and No. 9-150954, has a slide mount supply cartridge in which a plurality of the slide mounts are piled up perpendicularly therein. Each of the slide mounts is fed from a slide mount supply cartridge onto a moving stage and fixed to a reading station on the moving stage. Thereafter, when the moving stage moves in a sub-scanning direction, the image is read out from the slide mount by a CCD line image sensor of the scanner section. After the reading of the image, the slide mount is transported to a slide mount withdraw cartridge and is loaded in the withdraw cartridge.

In the slide mount carrier described above, a lower part of the withdraw cartridge is provided with an aperture through which a drawing roller is inserted. The drawing roller rotates to load the slide mount in the withdraw cartridge through an inlet. An angle of the slide mount against a direction in which the slide mount is fed becomes smaller during inserting the slide mount in the withdraw cartridge. Accordingly, a front end of the slide mount pushes the lowermost slide mount in the withdraw cartridge upwards while inserted, and therefore the slide mount is not smoothly inserted in the withdraw cartridge. Further, the front end is often caught by an edge of the frame of the lowest slide mount.

In accordance with the pre-characterising part of claim 1, EP 0 892 303 A2 discloses an apparatus in which the slide mount withdraw cartridge has an open bottom and a spring loaded member located beneath the bottom. The slide mounts a conveyed by means of a conveying mechanism, which is disposed in front of a lower front opening of the withdraw cartridge.

### SUMMARY OF THE INVENTION

An object of the present invention is to provide an apparatus in which the slide mount loading device inserts a slide mount in a withdraw cartridge smoothly.

This is achieved by the features of claim 1.

The present invention provides a device for inserting a slide mount in a withdraw cartridge without a front end of the slide mount sliding on a slide mount support member.

The present invention also provides a device for inserting a slide mount in a withdraw cartridge without an edge of the frame of the lowest slide mount catching a front end of the slide mount.

According to the invention, while the slide mount is inserted in the cartridge, the front end of the slide mount is apart from a mount support member provided for the opening for capable insertion of the drawing roller. Accordingly, the slide mount is smoothly loaded in the cartridge. Further the front end of the slide mount is not caught by a detection hole of a sort card and an edge of a frame of the slide mount at a lowermost position.

### BRIEF DISCRIPTION OF THE DRAWINGS

The above objects and advantages of the present invention will become easily understood by one of ordinary skill in the art when the following detailed description would be read in connection with the accompanying drawings, in which:
Figure 1 is a perspective view of a slide mount carrier;
Figure 2 is a perspective view of a slide mount cartridge;
Figure 3 is a schematic view of a slide reader having the carrier;
Figure 4 is a schematic view illustrating a structure in the carrier;
Figure 5 is a cross-sectional view of a withdraw cartridge illustrating a situation of slide mounts piling up therein;
Figure 6 is a cross-sectional view of the withdraw cartridge when the slide mount is inserted into it;
Figure 7 is a cross-sectional view of the withdraw cartridge, illustrating a state that the slide mount contacts to a guide roller.

### PREFERRED EMBODIMENTS OF THE INVENTION

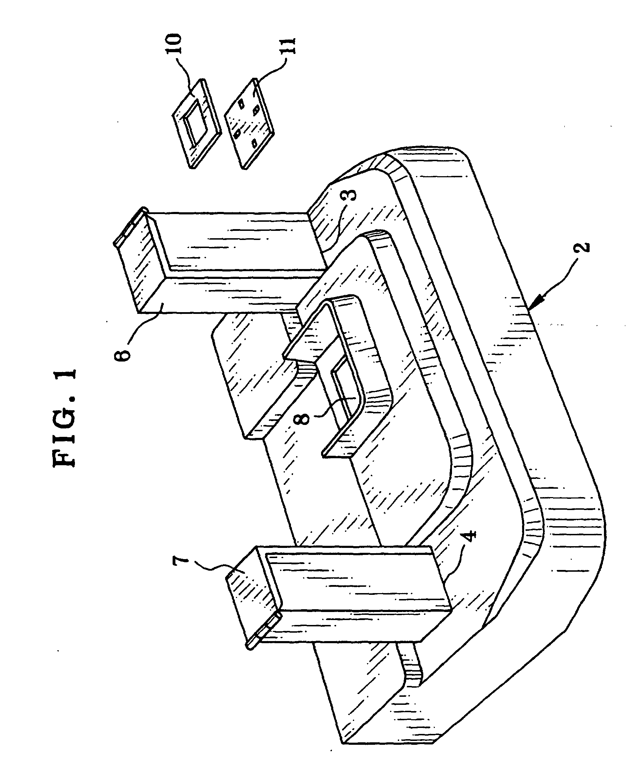

In FIG. 1, a slide mount 2 has openings 3 and 4 in which a supply cartridge 6 and a withdraw cartridge 7 are set respectively. In the supply cartridge 6, slide mounts 10 and sort cards 11 are loaded. As already known, the slide mount 10 has a structure that a positive film is sandwitched between tetragonal frame sheets. The sort card 11 is a tetragonal plate and has detection holes representing a sorting information. Each of the slide mount 10 and the sort card 11 is fed from the supply cartridge 6 through an inside of the mount carrier 2 to the withdraw cartridge 7. The sort card 11 is used for sorting theme, customer or the like of the slide mount 10.

In the mount carrier 2, a read-out aperture 8 is formed between the opening 3 and the opening 4, and used for reading out an image of the slide mount 10. When the slide mount 10 is disposed in a reading station, an image of the slide mount 10 is read out through the read-out aperture 8.

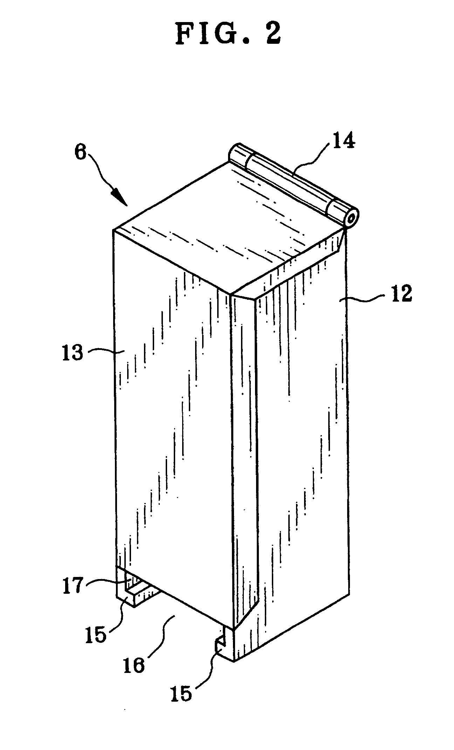

As shown in FIG. 2, the supply cartridge 6 is constructed of a cartridge body 12 and a lid 13. The cartridge body 12 is formed of a transparent synthetic resin and has a rectangular shaped shell such that the slide mounts 10 and sort card 11 may be piled up. To an upper side of the cartridge body 12, a lid 13 is attached through a hinge 14 and moves between an open position and a close position. In the open position, a side and a top of the cartridge body 12 are open for easily inserting or removing the slide mount 10.

In a lower side of the cartridge body 12, an inlet 17 is formed, and on a bottom of the cartridge body 12, a mount supporter 15 and an opening 16 is formed. The mount supporter 15 supports the lowest one of slide mounts 10 piling in the cartridge body 12 such that the slide mounts 10 may not fall from the cartridge body 12. The opening 16 is surrounded with the mount supporter 15. Further, the withdraw cartridge 7 has a same structure as the supply cartridge 6, and used as the withdraw cartridge 7 after becoming empty.

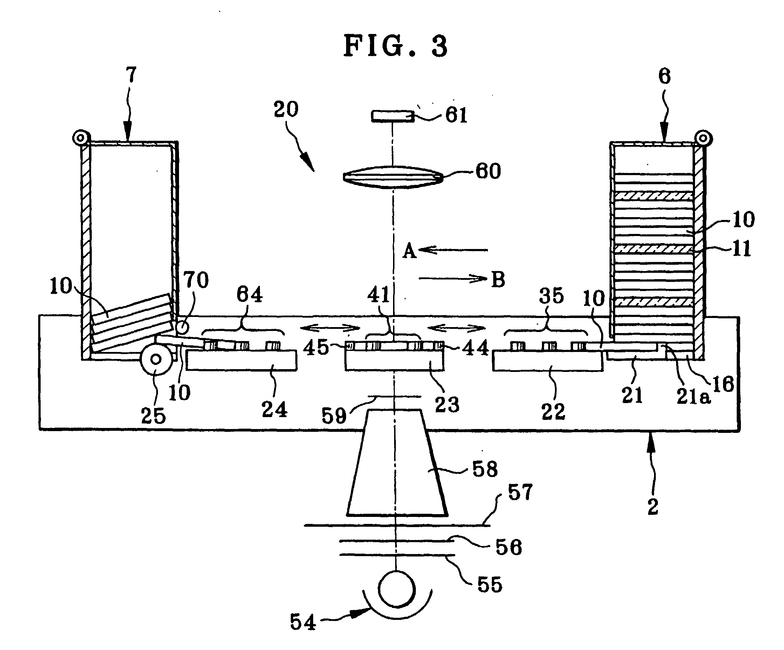

In FIG. 3, in the carrier 2, there are a pull out lever 21, a first feed section 22, a movable stage 23, a second feed section 24 and a drawing roller 25 which is made of rubber and rotated by a motor (not shown).

The pull out lever 21 is disposed in the opening 3 so as to enter through the opening 16 in the supply cartridge 6. The pull out lever 21 has a craw portion 21a which engages to a rear edge of the lowest one of the slide mounts 10. The pull out lever 21 is slid in a feed direction A and in a return direction B by a cam mechanism (not shown). When the pull out lever 21 is slid in the feed direction A, the slide mount 10 is pushed out toward the first feed section 22.

The first feed section 22 is provided with feed-roller pairs 35. By rotation of the feed-roller pair 35, the slide mount 10 is fed from the first feed section 22 to a moving stage 23 which slides in the feed direction A and in the return direction B. On the movable stage 23 the slide mount 10 is fixed at set position.

Above and below the movable stage 23, a line scanner 20 is provided for reading out an image of the slide mount 10. The line scanner 20 has a light source 54, an IR cut filter 55, a light amount adjusting plate 56, a filter 57, a light diffusing box 58 and a diffusing plate 59 below the movable stage 23. Above the movable stage 23, a lens unit 60 and a CCD line sensor 61 are disposed.

The line scanner 20 read out the image of the slide mount 10 at the set position on the movable stage 23, synchronized with the moving of the movable stage 23 in the feeding direction A (main-scanning direction). In order to read out the image, the light source 54 emits a light. The light passes through the IR cut filter 55, the light amount adjusting plate 56 and the filter 57 to enter into the light diffusing box 58. In the light diffusing box 58, an intensity distribution of the light is made so as to be uniform. After the light exits from the light diffusing box 58, the light passes through the diffusing plate 59 to perform more uniform. Then a part of the light passes in the slit provided for the movable stage 23, and passes through the slide mount 10. Thereafter, the lens unit 60 focuses the light onto the CCD line sensor 61. When receiving the part of the light which has been passed through the slide mount 10, the CCD line sensor 61 generates an image signals. The processing of the image is carried out in a known method by an image processor, and the image is printed with a digital printer (not shown). Note that there are two sorts of the balance filters 57, for a negative film and a positive film. Each of the balance filters 57 is selected in accordance with whether the slide mount 10 has a positive film or a negative film, to perform a color correction.

After reading the image by the line scanner 20, the slide mount 10 is transported into the second feed section 24. The second feed section 24 is provided with feed-roller pairs 64, and the feed-roller pair 64 is rotated to feed the slide mount 10 to the withdraw cartridge 7. The drawing roller 25 disposed in the opening 4 in order to enter through the opening 16 when the withdraw cartridge 7 is attached.

Near to the aperture 17 outside of the withdraw cartridge 7, a guide roller 70 is provided so as to rotate free. The guide roller 70 is formed of rubber or plastics. While the slide mount 10 is drawn into the withdraw cartridge 7 by rotation of the drawing roller 25, the guide roller 70 contacts to the rear end of the slide mount 10 such that the rear end may not be heap up so much.

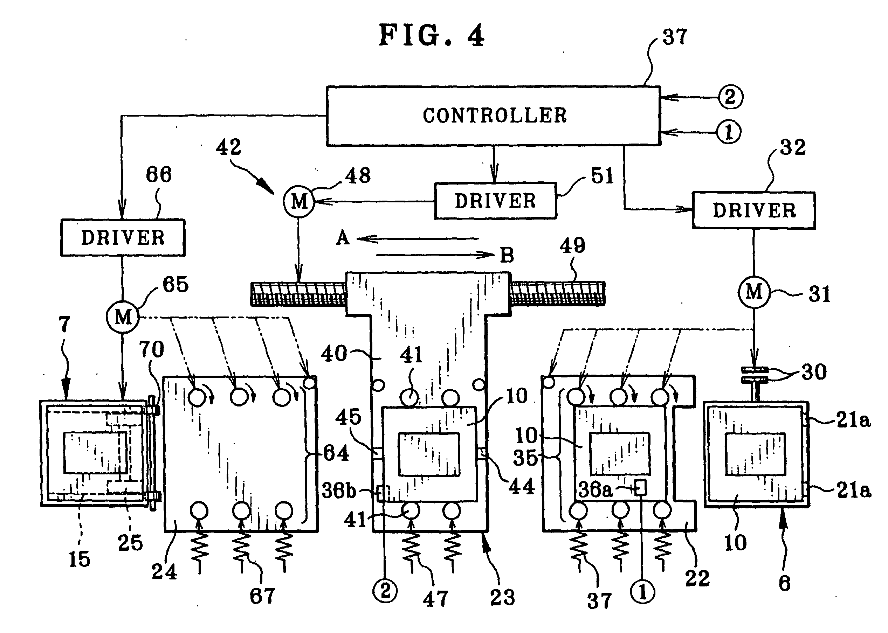

In FIG. 4, the pull out lever 21 is driven through a clutch 30 by a motor 31. Note that the indication 32 is a driver for the motor 31.

In the first feed section 22, the slide mount 10 is nipped by three of the feed roller pairs 35 which are biased by springs 37. The feed-roller pairs 35 are rotated by the motor 31. Further, in the first feed section 22 a mount sensor 36 is disposed for detect edges of the slide mount 10 and the sort card 11 that are fed by rotation of the feed-roller pairs 35. Corresponding to detecting the edge, the mount sensor 36 generates a detect signal and outputs it to the controller 37. Thus, a position of the slide mount 10 can be acknowledged of the controller 37. Further, the mount sensor 36 detects a discrimination hole of the sort card 11 in order to distinguish the slide mount 10 and the sort card 11.

The movable stage 23 is constituted of a stage body 40, two feed-roller pairs 41, a stage moving mechanism 42, a mount sensor 36b, and positioning projections 44, 45. The stage moving mechanism 42 is constituted of a scan motor 48 and a feed screw 49. In the stage moving mechanism 42, the scan motor 48 rotates the feed screw 49 in normal and reverse directions, and the rotation is transformed into slide movement of the stage body 40. Thus the stage body 40 slides between a receive position for receiving the slide mount 10 from the first feed section 22 and a delivery position for delivering the slide mount 10 to the second feed section 24.

The feed roller pairs 41 are biased by springs 47 to nip the slide mount 10, and rotated by a motor (not shown) to feed the slide mount 10 to the set position on the movable stage 23. When the slide mount 10 reaches to the set position, the edge of the slide mount 10 is detected by the mount sensor 37b. Thereby the mount sensor 37b generates a detection signal and send it to the controller 51. The controller 51 stops the feed roller pairs rotating and controls the positioning projections 44, 45 to nip and fix the slide mount 10 at the set position.

When the controller 37 discriminates, in response with the detect signal sent from the mount sensor 36a, that the sort card 11 is fed on the movable stage 23, even though the mount sensor 36b detects the edge of the sort card 11, the controller 37 does not stop rotating the feed-roller pairs 41, and the sort card 11 continues to be fed.

After setting the slide mount 10 to the set position, the stage body 40 slides further in a feed direction A, and thereby the pre-scanning is carried out. Then the stage body 40 slides in the return direction B, during which the stage body 40 stops once in order to carry out auto focusing. Thereafter the stage body 40 slides in the feed direction A again to carry out fine scanning. The pre-scanning and the fine-scanning are carried out by driving the line scanner 20 synchronized with the slide of the movable stage 23. Note that the number 51 is a driver for a scanning motor 48.

In the second feed section 24 the three feed-roller pairs 64 is biased by springs 67 to nip the slide mount 10 from the movable stage 23 and rotate to feed it in the feed direction A. In order to feed the slide mount 10 into the withdraw cartridge 7, the motor 65 drives the drawing roller 25 to rotate. Note that the number 66 is a driver for the motor 65.

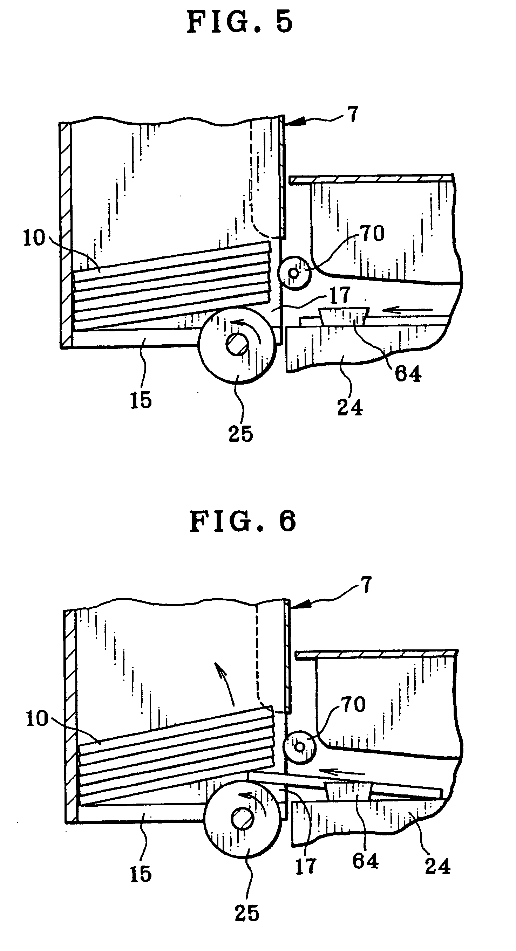

Effects of the above embodiments will be described now. As shown in FIG. 5, after the fine-scanning, the slide mount 10 is fed to the withdraw cartridge 7 by the feed-roller pairs 64, and drawn through the inlet 17 into the withdraw cartridge 7. Thereby, as shown in FIG. 6, the front end of the slide mount 10 is ridden up on the periphery of the drawing roller 25. After the front end of the slide mount 10 leaves the guide roller 25, the front end is guided to another slide mount located at lowermost in the withdraw cartridge 4. Therefore, the rear end of the slide mount 10 lifts gradually.

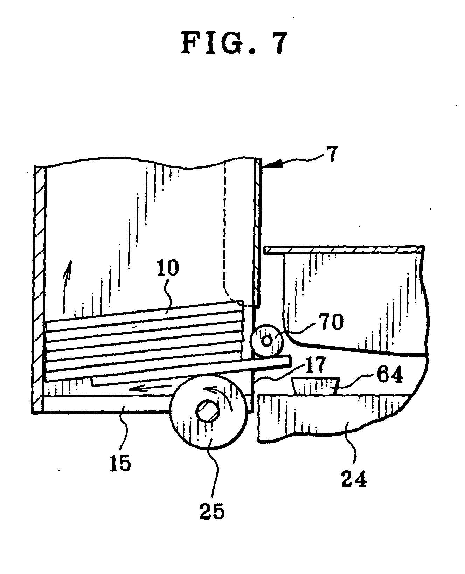

Thus, as shown in FIG. 7, the rear end contacts to the guide roller 70, and the slide mount 10 is held by the drawing roller 25 and the guide roller 70. While the slide mount 10, due to rotation of drawing roller 25, is drawn into the withdraw cartridge 7, the front end of the slide mount 10 does not contact to the mount supporter 15, and keeps at a constant angle to the feeding direction A. Accordingly, the front end of the slide mount 10 which enters into the withdraw cartridge 7 is not caught by the edge of the frame of another slide mount 10 located at lowermost. When the front end of the slide mount 10 leaves the guide roller 70, the lower end falls to contact to the mount supporter 15.

## Claims

1. An apparatus including a slide mount cartridge (7) and a slide mount loading device adapted to pile up slide mounts (10) in said slide mount cartridge (7), said cartridge (7) having an inlet (17) formed in a lower part of said cartridge (7), and an opening (16) being formed in the bottom of said cartridge (7), said slide mount loading device being **characterised by** a drawing roller (25) protruding into said opening (16) of said cartridge (7) and adapted to lift the front end of said slide mount (10) and insert said slide mount (10) through said inlet (17) into said cartridge (7);
and a slide mount contact member (70) provided close to said inlet (17) outside of said cartridge (7), said slide mount contact member (70) being adapted to restrict the lift of the rear end of said slide mount (10) such that the angle of the slide mount (10) relative to the housing of the cartridge (7) is kept constant while said slide mount (10) is drawn into said cartridge (7) by said drawing roller (25) and while it is in contact to said drawing roller (25) and said slide mount contact member (70).

2. The apparatus as claimed in claim 1, wherein said slide mount contact member (70) is a roller (70).

3. The apparatus as claimed in claim 2, wherein said cartridge (7) includes a cartridge body (12), and said angle of said slide mount (10) is determined such that a front end of said slide mount (10) may not contact said bottom of said cartridge body (12) while said slide mount contact member (70) restricts a rear end of said slide mount (10).

4. The apparatus as claimed in claim 3, wherein said cartridge (7) further includes a lid (13) which is openably attached to said cartridge body (12), and said inlet (17) is formed between said cartridge body (12) and said lid (13).

## Patentansprüche

1. Vorrichtung mit einem Diarähmchenmagazin (7) und einer Diarähmchenladeeinrichtung, ausgebildet zum Aufschichten von Diarähmchen (10) in dem Diarähmchenmagazin (7), welches einen in seinem unteren Teil ausgebildeten Einsatz (17) und eine in seinem Boden ausgebildete Öffnung (16) besitzt, wobei die Diarähmchenladeeinrichtung **gekennzeichnet ist durch** eine in die Öffnung (16) des Magazins (7) hineinragende Zugwalze (25), ausgebildet zum Anheben des vorderen Endes des Diarähmchens (10) und zum Einführen des Diarähmchens (10) **durch** den Einlaß (17) in das Magazin (7);
und ein Diarähmchenkontaktelement (70), welches nahe bei dem Einlaß (17) außerhalb des Magazins (7) vorgesehen ist, wobei das Diarähmchenkontaktelement (70) dazu ausgebildet ist, das Anheben des hinteren Endes des Diarähmchens (10) derart zu beschränken, daß der Winkel des Diarähmchens (10) relativ zum Gehäuse des Magazins (7) konstant gehalten wird, wenn das Diarähmchen (10) von der Zugwalze (25) in das Magazin (7) eingezogen wird und während es in Berührung mit der Zugwalze (25) und dem Diarähmchenkontaktelement (70) steht.

2. Vorrichtung nach Anspruch 1, bei der das Diarähmchenkontaktetement (70) eine Walze (70) ist.

3. Vorrichtung nach Anspruch 2, bei der das Magazin (7) einen Magazinkörper (12) enthält, und der Winkel des Diarähmchens (10) derart festgelegt ist, daß ein vorderes Ende des Diarähmchens (10) den Boden des Magazinkörpers (12) nicht berühren kann, während das Diarähmchenkontaktelement (70) das hintere Ende des Diarähmchens (10) beschränkt.

4. Vorrichtung nach Anspruch 3, bei der das Magazin (7) außerdem einen Dekkel (13) enthält, der in zu öffnender Weise an dem Magazinkörper (12) befestigt ist, und der Einsatz (17) zwischen dem Magazinkörper (12) und dem Deckel (13) ausgebildet ist.

## Revendications

1. Appareil incluant une cartouche (7) de cadre de diapositive et un dispositif de chargement de cadre de diapositive adapté de manière à empiler les cadres (10) de diapositives dans ladite cartouche (7) de cadre de diapositives, ladite cartouche (7) ayant une entrée (17) formée dans une partie inférieure de ladite cartouche (7), et une ouverture (16) étant formée dans le fond de ladite cartouche (7), ledit dispositif de chargement de cadre de diapositive étant **caractérisé par** un rouleau entraîneur (25) dépassant dans ladite ouverture (16) de ladite cartouche (7) et adapté de manière à lever l'extrémité avant dudit cadre (10) de diapositive et afin d'insérer ledit cadre (10) de diapositive au travers de ladite entrée (17) dans ladite cartouche (7) ;
et un élément de contact (70) de cadre de diapositive prévu à proximité de ladite entrée (17) à l'extérieur de ladite cartouche (7), ledit élément de contact (70) de cadre de diapositive étant adapté afin de restreindre la levée de l'extrémité arrière dudit cadre (10) de diapositive de telle manière que l'angle du cadre (10) de diapositive par rapport au logement de la cartouche (7) est maintenu constant tandis que ledit cadre (10) de diapositive est entraîné à l'intérieur de ladite cartouche (7) par ledit rouleau entraîneur (25) et tandis qu'il est en contact avec ledit rouleau entraîneur (25) et ledit élément de contact (70) de cadre de diapositive.

2. Appareil selon la revendication 1, dans lequel ledit élément de contact (70) de cadre de diapositive est un rouleau (70).

3. Appareil selon la revendication 2, dans lequel ladite cartouche (7) inclut un corps (12) de cartouche, et ledit angle dudit cadre (10) de diapositive est déterminé de telle manière que l'extrémité avant dudit cadre (10) de diapositive ne peut être en contact avec ledit fond dudit corps (12) de cartouche tandis que ledit élément de contact (70) de cadre de diapositive restreint une extrémité arrière dudit cadre (10) de diapositive.

4. Appareil selon la revendication 3, dans lequel ladite cartouche (7) inclut en outre un couvercle (13) qui est fixé de manière à pouvoir être ouvert sur ledit corps (12) de cartouche, et ladite ouverture (17) est formée entre ledit corps (12) de cartouche et ledit couvercle (13).
